# EUROPÄISCHE PATENTSCHRIFT

(11) **EP 2 501 222 B1**
(45) Veröffentlichungstag und Bekanntmachung des Hinweises auf die Patenterteilung: **24.10.2018**
(21) Anmeldenummer: 10773080.6
(22) Anmeldetag: 02.11.2010
(51) Int. Cl.: A01K 11/00

(54) **BEFESTIGUNGSANKER UND BEFESTIGUNGSANKERBAND**
FASTENING ANCHOR AND FASTENING ANCHOR BAND
ANCRE DE FIXATION ET BANDE D'ANCRES DE FIXATION

(30) Priorität: 19.11.2009 DE 102009054005
(43) Veröffentlichungstag der Anmeldung: 26.09.2012
(73) Patentinhaber: A. RAYMOND et Cie, 38000 Grenoble (FR)
(72) Erfinder: BÜSCH, Martin, 79588 Efringen-Kirchen (DE); BURG, Patrice, 68440 Steinbrunn-le-Bas (FR); WEISSENFELD, Ronnie, 79576 Weil am Rhein (DE); BOKÜHN, Sven, 79664 Wehr (DE)
(74) Vertreter: Grünecker Patent- und Rechtsanwälte PartG mbB
(86) Internationale Anmeldenummer: PCT/EP2010/066628
(87) Internationale Veröffentlichungsnummer: WO 2011/061052

(56) Entgegenhaltungen:
- DE-A1- 19 726 467
- DE-A1- 19 939 277
- FR-A1- 2 929 804
- GB-A- 2 023 510
- US-A- 4 120 303
- US-A- 4 250 643

## Beschreibung

Die Erfindung betrifft einen Befestigungsanker gemäß dem Oberbegriff des Patentanspruches 1.

Die Erfindung betrifft weiterhin ein Befestigungsankerband mit einer Anzahl von derartigen Befestigungsankern.

Die GB 2 023 510 A offenbart einen Befestigungsanker zum Befestigen an einem nachgiebigen Weichmaterial in Gestalt eines Tierohres. Der Befestigungsanker weist eine Deckplatte, einen an der Deckplatte angeformten sowie sich von dieser weg erstreckenden länglichen Schaft und eine Widerhakenanordnung auf, die an dem der Deckplatte abgewandten Ende an dem Schaft angeformt ist. In der Deckplatte ist eine Aufnahmestruktur in Gestalt von zwei beidseitig des Schaftes angeordneten Ausnehmungen ausgebildet, durch die bei Applizieren des Befestigungsankers zwei Stifte eines Setzwerkzeuges durchtreten und an einem durch die Widerhakenanordnung an dem der Deckplatte abgewandten Ende des Schaftes ausgebildeten Queranschlag anliegen. Bei dem in der vorgenannten Druckschrift offenbarten Setzwerkzeug ist eine Schubstange vorhanden, die die Stifte trägt und die über einen Kipphebel gegen die Federkraft einer Druckfeder betätigbar ist.

Die FR 2 929 804 A1 offenbart ein zweiteiliges Markerelement zum Befestigen an einem Tierohr. Das Markerelement umfasst einen männlichen und einen weiblichen Teil, zwischen denen das Tierohr positioniert wird. Der männliche Teil umfasst einen Widerhakenteil zum haltenden Eingriff mit dem weiblichen Teil und einen umfänglich vollständig geschlossenen Aufnahmeraum zum Einführen eines Stiftes beim Befestigen des Markerelements.

Weitere zweiteilige Markerelemente für Tierohren sind aus der DE 197 26 467 A1, der DE 199 39 277 A1 und der US 4,120,303 A bekannt.

Der Erfindung liegt die Aufgabe zugrunde, einen Befestigungsanker der eingangs genannten Art anzugeben, der auf einfache Art und Weise auch unter robusten Arbeitsbedingungen in einem nachgiebigen Weichmaterial applizierbar ist.

Weiterhin liegt der Erfindung die Aufgabe zugrunde, ein Befestigungsankerband anzugeben, das in Verbindung mit Befestigungsankern der eingangs genannten Art ein schnelles und sicheres Applizieren der Befestigungsanker in einem nachgiebigen Weichmaterial gestattet.

Diese Aufgaben werden durch einen Befestigungsanker gemäß Patentanspruch 1 bzw. durch ein Befestigungsankerband gemäß Patentanspruch 4 gelöst.

Dadurch, dass die Aufnahmestruktur in dem Schaft des Befestigungsankers integriert ist, lässt sich der Befestigungsanker gegen aus verschiedenen Richtungen angreifende Kräfte widerstandsfähig fassen und applizieren.

Die Magazinierung von erfindungsgemäßen Befestigungsankern in Gestalt eines erfindungsgemäßen Befestigungsankerbandes führt insbesondere in Verbindung mit einem nachfolgend beschriebenen Setzwerkzeug zu einer hohen Applizierrate.

Das Ausbilden des nachfolgend beschriebenen Setzwerkzeuges mit einer Eingriffstruktur, die zum Eingriff mit der an dem Schaft eines Befestigungsankers ausgebildeten Aufnahmestruktur eingerichtet ist, führt zu einer auch unter rauen Arbeitsbedingungen zuverlässigen Applikation der Befestigungsanker.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer perspektivischen Ansicht einen Ausschnitt aus einem Ausführungsbeispiel für ein erfindungsgemäßes Befestigungsankerband,
- Fig. 2: in einer perspektivischen Ansicht ein Ausführungsbeispiel eines erfindungsgemäßen Befestigungsankers insbesondere zum Einsatz mit einem Befestigungsankerband gemäß Fig. 1,
- Fig. 3: in einer teilgeschnittenen perspektivischen Ansicht ein beispielhaftes Setzwerkzeug, das motorisch angetrieben und zum Einsatz mit einem Befestigungsankerband gemäß Fig. 1 eingerichtet ist,
- Fig. 4: in einer perspektivischen Ansicht bei dem Setzwerkzeug gemäß Fig. 3 einen Maschinenelementrahmen mit Anbauteilen,
- Fig. 5: in einer perspektivischen Ansicht bei dem Setzwerkzeug gemäß Fig. 3 und Fig. 4 das Zusammenwirken einer Verschiebekulisse und eines Antriebsmotors,
- Fig. 6: in einer perspektivischen teilgeschnittenen Ansicht das motorisch angetriebene beispielhafte Setzwerkzeug gemäß Fig. 3 bis Fig. 5 mit einer Anzahl von an einem Befestigungsankerband gemäß Fig. 1 magazinierten Befestigungsankern gemäß Fig. 2 bei Beginn eines Setzvorganges,
- Fig. 7: in einer teilgeschnittenen Teilansicht die Anordnung gemäß Fig. 6 im Bereich der Befestigungsanker,
- Fig. 8: in einer perspektivischen Detailansicht die Anordnung des Befestigungsankerbandes und der Schubstange nach Beginn des Setzvorganges mit einer gegenüber der Anordnung gemäß Fig. 6 und Fig. 7 vorgeschobenen Schubstange,
- Fig. 9: in einer teilgeschnittenen perspektivischen Ansicht entsprechend Fig. 7 die Anordnung gemäß Fig. 6 mit vorgeschobener Schubstange,
- Fig. 10: in einer geschnittenen perspektivischen Ansicht die Anordnung gemäß Fig. 6 mit der Schubstange in einer Zwischenstellung nach Abtrennen eines Befestigungsankers,
- Fig. 11: in einer perspektivischen Ansicht entsprechend Fig. 5 das Setzwerkzeug gemäß Fig. 3 mit einem Befestigungsankerband nach Abtrennen eines Befestigungsankers mit der Schubstange in der vorgenannten Zwischenstellung,
- Fig. 12: in einer perspektivischen Ansicht entsprechend Fig. 8 das Einstechmesser in einer über einen abgetrennten Befestigungsanker hinausragenden Applizierstellung,
- Fig. 13: in einer perspektivischen Ansicht entsprechend Fig. 11 die Schubstange in einer maximal vorgeschobenen Stellung nach Applizieren eines Befestigungsankers,
- Fig. 14: in einer Detailansicht die Schubstange sowie ein Einstechmesser gemäß dem beispielhaften motorisch angetriebenen Setzwerkzeug gemäß Fig. 3 in einer Stellung vor Applizieren des Befestigungsankers in ein nachgiebiges Weichmaterial,
- Fig. 15: die Anordnung gemäß Fig. 14 unmittelbar nach Eintauchen des Einstechmessers und des Befestigungsankers in das Weichmaterial,
- Fig. 16: die Anordnung gemäß Fig. 14 mit der Schubstange in einer maximal vorgeschobenen Stellung,
- Fig. 17: die Anordnung gemäß Fig. 14 bis Fig. 16 mit dem applizierten Befestigungsanker und einem weitgehend zurückgezogenen Einstechwerkzeug und
- Fig. 18: in einer perspektivischen Ansicht ein Beispiel eines rein manuell handhabbaren Setzwerkzeuges mit einem Befestigungsanker gemäß dem Ausführungsbeispiel von Fig. 2.

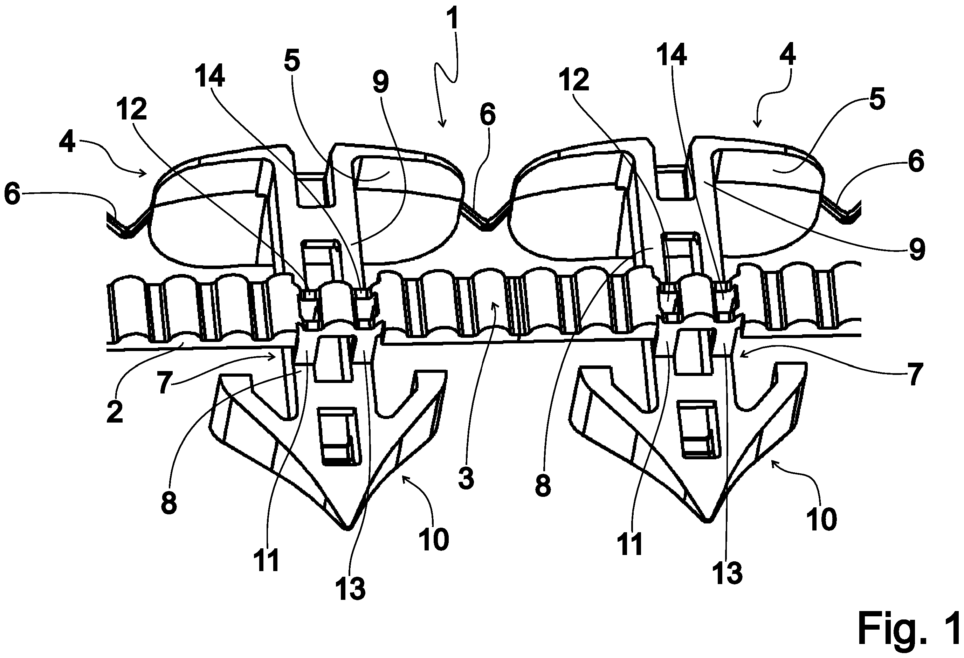

Fig. 1 zeigt in einer perspektivischen Ansicht einen Ausschnitt aus einem Ausführungsbeispiel eines erfindungsgemäßen Befestigungsankerbandes 1, das aus einem hartelastischen Kunststoffmaterial hergestellt ist. Das Befestigungsankerband 1 weist ein Transportband 2 auf, das mit einer aus regelmäßig angeordneten Erhebungen und Vertiefungen gebildeten Zahnstruktur 3 ausgebildet ist. Weiterhin verfügt das Befestigungsankerband 1 gemäß Fig. 1 über eine Anzahl von Befestigungsankern 4, von denen in der Darstellung gemäß Fig. 1 zwei dargestellt sind. Jeder Befestigungsanker 4 ist mit einer flachen Deckplatte 5 ausgebildet, die über Deckplattenanbindungsstege 6, die sich zwischen Deckplatten 5 benachbarter Befestigungsanker 4 erstrecken, miteinander verbunden sind. Bei jedem Befestigungsanker 4 sind an der Deckplatte 5 zwei einander gegenüber liegende, einen Schaft 7 bildende Schaftwangen 8, 9 angeformt, an deren von der Deckplatte 5 abgewandten Enden eine Widerhakenanordnung 10 ausgebildet ist. Die Befestigungsanker 4 sind bei diesem Ausführungsbeispiel über jeweils zwei mit einer Schaftwange 8, 9 verbundene Schaftanbindungsstege 11, 12, 13, 14 mit dem Transportband 2 verbunden.

Es versteht sich, dass in nicht dargestellten Ausführungen auch andere, beispielsweise gegenüber der Anordnung gemäß Fig. 1 rechtwinklige sowie mit einer anderen Anzahl von Schaftanbindungsstegen 11, 12, 13, 14 bewerkstelligte Befestigungen von Befestigungsankern 4 an einem Transportband 2 oder auch zwei beziehungsweise mehreren Transportbändern 2 vorgesehen sein können.

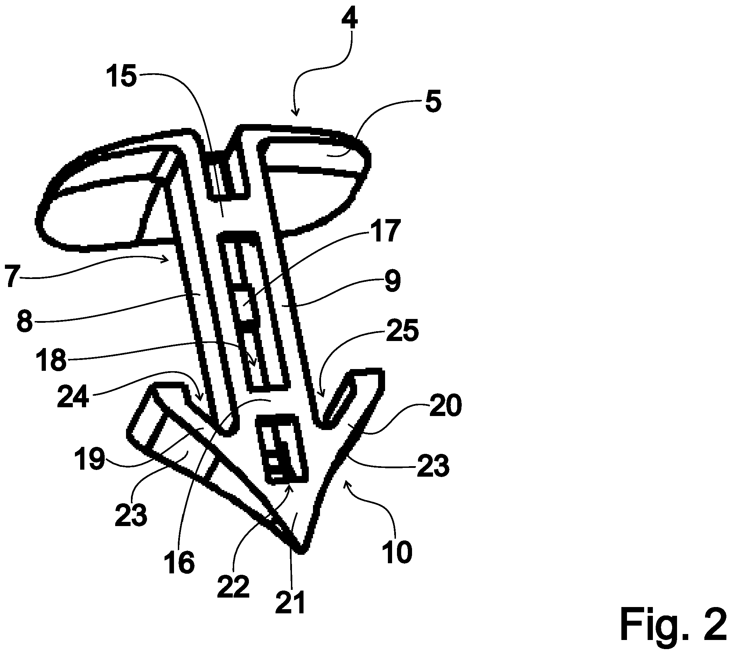

Fig. 2 zeigt ein Ausführungsbeispiel eines erfindungsgemäßen Befestigungsankers 4, wie er insbesondere bei dem Ausführungsbeispiel eines erfindungsgemäßen Befestigungsankerbandes 1 gemäß Fig. 1 verwendet worden ist, aber auch als Schüttgut vorliegen kann. Aus Fig. 2 ist ersichtlich, dass sich zwischen den Schaftwangen 8, 9 eine Anzahl von Querstreben 15, 16, 17 erstrecken, wobei wenigstens eine Querstrebe 17 auf einer, in der Darstellung gemäß Fig. 2 dem Betrachter abgewandten Seite der Schaftwangen 8, 9 und wenigstens zwei Querstreben 15, 16 auf der anderen, in der Darstellung gemäß Fig. 2 dem Betrachter zugewandten Seite der Schaftwangen 8, 9 ausgebildet sind. Somit umschließen die Schaftwangen 8, 9 und die Querstreben 15, 16, 17 einen eine Aufnahmestruktur bildenden Aufnahmeraum 18.

Aus Fig. 2 ist weiterhin ersichtlich, dass sich die Deckplatte 5 lediglich von drei Seiten des Schaftes 7 radial nach außen erstreckt und mit der vierten, in der Darstellung gemäß Fig. 2 dem Betrachter zugewandten Seite des Schaftes 7 bündig abschließt.

Bei einer nicht dargestellten Abwandlung ragt die Deckplatte 5 radial über alle Seiten des Schaftes 7 über.

Die Widerhakenanordnung 10 verfügt bei dem Ausführungsbeispiel eines erfindungsgemäßen Befestigungsankers 4 gemäß Fig. 2 über zwei seitlich des Schaftes 7 überstehende Hakenwangen 19, 20, die sich von einer in Verlängerung des Schaftes 7 liegenden Spitze 21 weg in Richtung der Deckplatte 5 erstrecken. Somit bildet die Spitze 21 mit ihrer der Deckplatte 5 zugewandten Seite für den Aufnahmeraum 18 einen Queranschlag 22. Jede Hakenwange 19, 20 ist mit einer außenseitigen geschwungenen Schrägseite 23 versehen, die sich ausgehend von der Spitze 21 zunächst gegenüber der Längsachse beginnend mit einer relativ geringen Anstellung mit zunehmendem Abstand von der Spitze 21 mit einer radial nach außen zunehmenden Anstellung in Richtung der Deckplatte 5 erstreckt und schließlich mit einer im der Spitze 21 abgewandten Endbereich im Wesentlichen parallelen Ausrichtung zu dem Schaft 7 endet. Zwischen den der Spitze 21 abgewandten Enden der Hakenwangen 19, 20 und den jeweils gegenüber liegenden Schaftwangen 8, 9 ist jeweils eine Hintergriffsvertiefung 24, 25 ausgebildet, um eine hohe Verankerungswirkung zu erzielen.

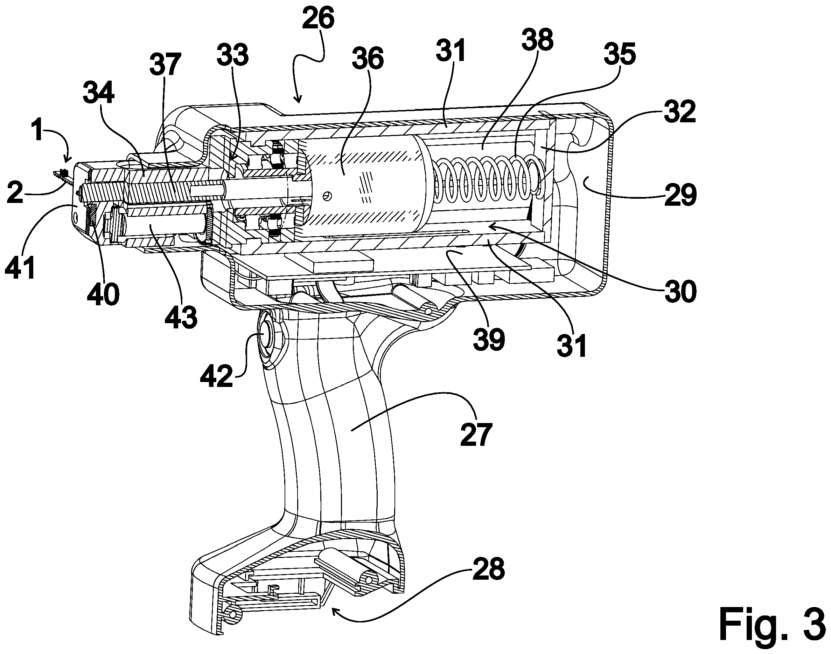

Fig. 3 zeigt in einer teilgeschnittenen perspektivischen Ansicht ein beispielhaftes motorisch angetriebenes Setzwerkzeug 26 zum Setzen von in Fig. 3 nicht dargestellten Befestigungsankern 4, die an einem mit einem Transportband 2 ausgestatteten Befestigungsankerband 1 gemäß Fig. 1 magaziniert sind. Das Setzwerkzeug 26 gemäß Fig. 3 ist pistolenartig ausgeführt und weist einen Handgriff 27 auf, an dessen freien Ende eine Akkuaufnahme 28 ausgebildet ist, in der ein in Fig. 3 nicht dargestellter Akkumulator zum Bereitstellen elektrischer Energie austauschbar befestigbar ist. An dem der Akkuaufnahme 28 gegenüber liegenden Ende ist an den Handgriff 27 ein im Wesentlichen quaderförmig ausgebildetes und sich mit seiner Längsseite quer zu dem Handgriff 27 erstreckendes Aufnahmegehäuse 29 angeformt.

In dem Aufnahmegehäuse 29 ist ein Maschinenelementrahmen 30 fest angeordnet, der aus zwei parallel einander gegenüber liegenden Längslagerplatten 31, die sich in Längsrichtung des Aufnahmegehäuses 29 erstrecken, einer sich an einem dem Handgriff 27 abgewandten Ende der Längslagerplatten 31 angeordneten Widerlagerplatte 32, einem der Widerlagerplatte 32 gegenüber liegend angeordneten Kopflagerteil 33 sowie einem auf der den Längsplatten 31 gegenüber liegenden Seite des Kopflagerteiles 33 angeordneten Schaftlagerteil 34 aufgebaut ist.

Zwischen den Längslagerplatten 31 ist eine spiralförmig gewendelte Druckfeder 35 angeordnet, die sich mit einem Ende an der Widerlagerplatte 32 und mit dem anderen Ende an einer Verschiebekulisse 36 abstützt, die zwischen den Längslagerplatten 31 in Längsrichtung derselben verschiebbar gelagert ist. Mit der Verschiebekulisse 36 ist fest eine Schubstange 37 gekoppelt, die sich bis in das Schaftlagerteil 34 hinein erstreckt.

Weiterhin ist in dem Aufnahmegehäuse 29 ein Antriebsmotor 38 sowie eine Steuerungselektronik 39 angeordnet, mit der im Zusammenwirken mit einem Kraftsensor 40, der hinter einer am freien Endbereich der Schubstange 37 angeordneten Stirnplatte 41 in dem Schaftlagerteil 34 angeordnet ist, und mit einem in dem Handgriff 27 angeordneten Auslösetastknopf 42 das motorisch angetriebene Setzen von Befestigungsankern 4, wie weiter unten im Detail näher erläutert, unter Mitwirken einer mit dem Antriebsmotor 38 gekoppelten Transportbandförderwelle 43 zu bewirken.

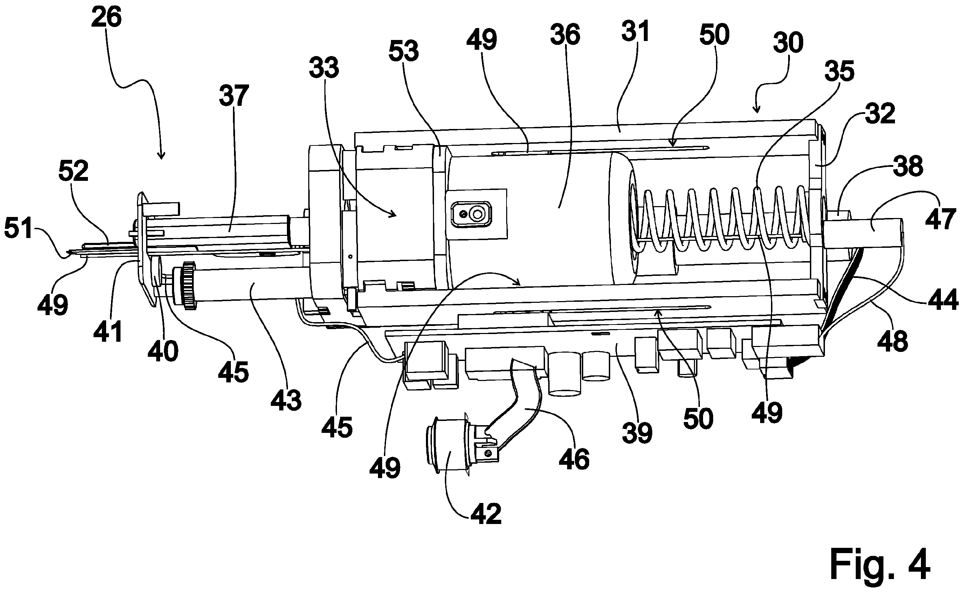

Fig. 4 zeigt in einer perspektivischen Ansicht den Maschinenelementrahmen 30 des beispielhaften motorisch angetriebenen Setzwerkzeuges 26 gemäß Fig. 3. Aus Fig. 4 ist ersichtlich, dass der Antriebsmotor 38, der Kraftsensor 40 und der Auslösetastknopf 42 jeweils über eine elektrische Leitungsanordnung 44, 45, 46 mit der Steuerungselektronik 39 verbunden sind. Weiterhin lässt sich der Darstellung gemäß Fig. 4 entnehmen, dass das motorisch angetriebene Setzwerkzeug 26 in dem dargestellten Beispiel über einen vorzugsweise im sichtbaren Spektralbereich emittierenden Laser 47 verfügt, der an der Widerlagerplatte 32 angebracht und ebenfalls über eine elektrische Leitungsanordnung 48 mit der Steuerungselektronik 39 verbunden ist. Der mit dem Laser 47 erzeugbare Laserstrahl 49 durchtritt den Maschinenelementrahmen 30 und die Stirnplatte 41, so dass er beim Applizieren von in Fig. 4 nicht dargestellten Befestigungsankern 4 als Applikationsreferenz zum Positionieren der Spitze 21 dienen kann.

Weiterhin lässt sich der Darstellung gemäß Fig. 4 entnehmen, dass die Verschiebekulisse 36 über diametral einander gegenüber liegende Führungssockel 49, die in in den Längslagerplatten 31 eingebrachte Führungsnuten 50 eingreifen, verschiebbar und drehfest gelagert ist.

Schließlich lässt sich der Darstellung gemäß Fig. 4 entnehmen, dass an dem der Verschiebekulisse 36 abgewandten Ende der Schubstange 37 ein Einstechmesser 51 und ein eine Eingriffstruktur bildender Einschiebestift 52 angebracht sind, die in der Anordnung gemäß Fig. 4, in der die Verschiebekulisse 36 in ihrer der Widerlagerplatte 32 am weitesten beabstandeten Anordnung unter Anliegen an einer sich quer zu den Längslagerplatten 31 erstreckenden Anschlagplatte 53 ist, sich über die Stirnplatte 41 hinaus erstrecken. Das Einstechmesser 51 und der Einschiebestift 52 sind fest miteinander verbunden und an der Schubstange 37 angebracht.

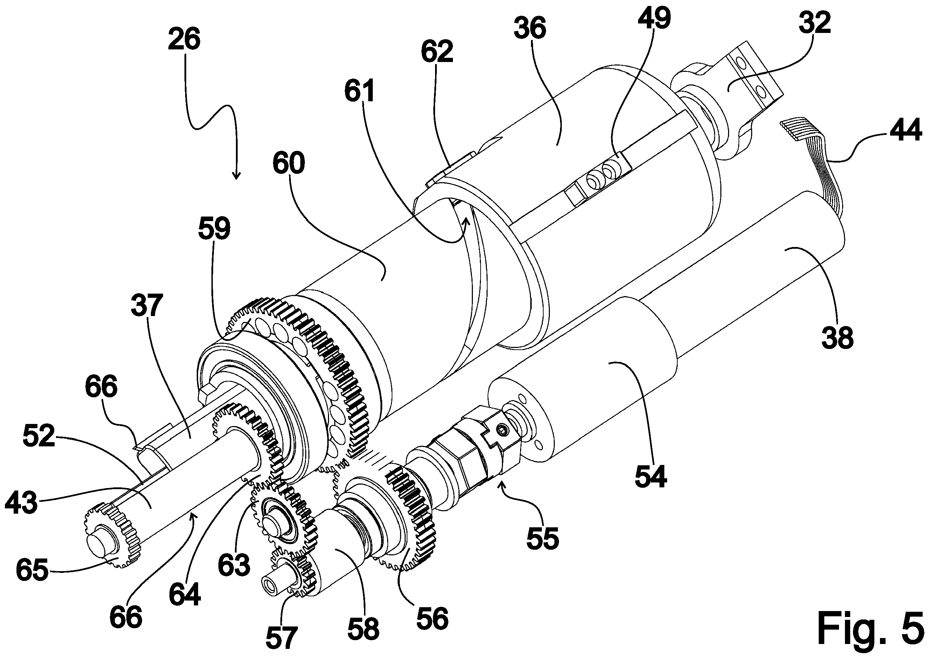

Fig. 5 zeigt in einer perspektivischen Ansicht bei dem motorisch angetriebenen Setzwerkzeug 26 gemäß Fig. 3 und Fig. 4 insbesondere das Zusammenwirken der Verschiebekulisse 36 und des Antriebsmotors 38. Der mit einer in Fig. 5 nicht sichtbaren drehbaren Antriebswelle ausgestattete Antriebsmotor 38 ist mit einem Antriebsgetriebe 54 gekoppelt, das über eine Wellenkupplung 55 ein Steuerwellenantriebszahnrad 56 und ein Transportwellenantriebszahnrad 57, die drehfest an einer Abtriebswelle 58 angebracht sind, zu einer Drehung antreibt.

Das Steuerwellenantriebszahnrad 56 ist mit einem Steuerwellenabtriebszahnrad 59 in Eingriff, das drehfest mit einem Steuernutkörper 60 gekoppelt ist. Der Steuernutkörper 60 ist mit einer Steuernut 61 ausgebildet und ragt in den Innenraum der hohlzylinderartig ausgebildeten Verschiebekulisse 36 hinein, wobei ein an der Verschiebekulisse 36 angeordneter und in den Innenraum der Verschiebekulisse 36 überstehender Nutstift 62 in die Steuernut 61 eingreift. Dadurch ist bei Drehen der Abtriebswelle 58 die Verschiebekulisse 36 zum Ausführen der weiter unten näher erläuterten Bewegungsschritte über entsprechend eingerichtete Ausgestaltungen der Steuernut 61 zwangsgesteuert bewegbar.

Das Transportwellenantriebszahnrad 57 steht mit einem Zwischenzahnrad 63 in Eingriff, das wiederum mit einem an der Transportbandförderwelle 53 drehfest angebrachten Transportwellenabtriebszahnrad 64 zusammenwirkt. Weiterhin trägt die Transportbandförderwelle 53 ein Transportbandförderzahnrad 65, das mit der Zahnstruktur 3 des Transportbandes 2 eines in Fig. 5 nicht dargestellten Befestigungsankerbandes 1 in Eingriff ist.

An der Schubstange 37 sind beidseitig des Einschiebestiftes 52 Abtrennschneiden 66 angeordnet, von denen in der Darstellung gemäß Fig. 5 eine zu sehen ist.

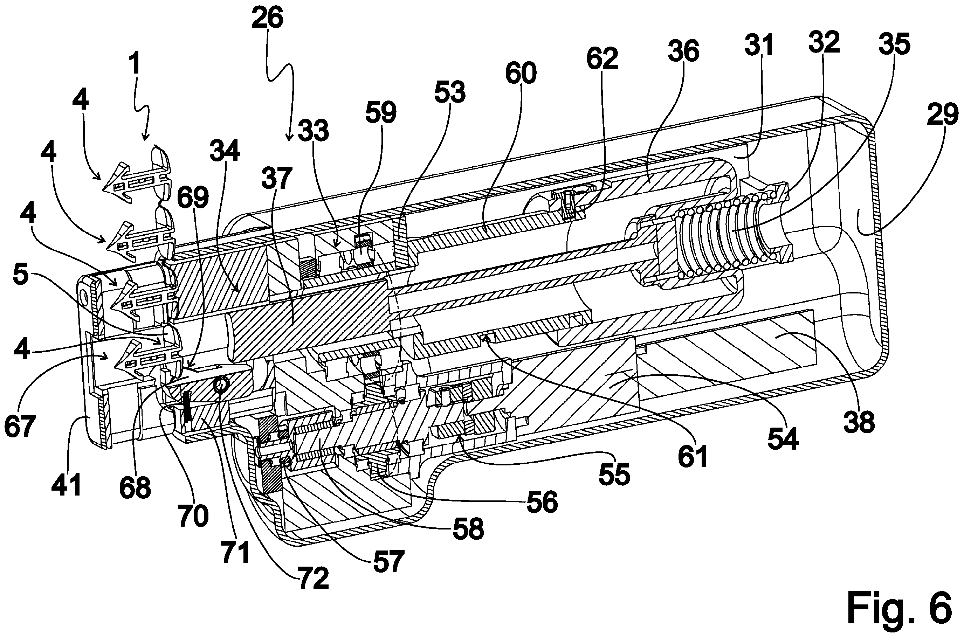

Fig. 6 zeigt in einer perspektivischen teilgeschnittenen Ansicht das beispielhafte motorisch angetriebene Setzwerkzeug 26 gemäß Fig. 3 bis Fig. 5 mit einer Anzahl von an einem Befestigungsankerband 1 gemäß Fig. 1 magazinierten Befestigungsankern 4 gemäß Fig. 2 bei Beginn eines Setzvorganges. In der Anordnung gemäß Fig. 6 ist die Verschiebekulisse 36 in einer der Widerlagerplatte 32 nächstbenachbarten Anordnung, in der die Druckfeder 35 maximal zusammengedrückt ist. Ein Befestigungsanker 4 ist in einem Auswurfschacht 67, innerhalb dem sich die Schubstange 37 bewegt, angeordnet, wobei eine Randseite der Deckplatte 5 dieses Befestigungsankers 4 in eine in einer Fixierwippe 68 eingebrachten Fixiernut eingreift. Die Fixierwippe 68 ragt mit einer Anfahrseite 69 in den Auswurfschacht 67 hinein und ist gegen die Rückstellkraft einer Rückstelldruckfeder 70, die mit ihrem anderen Ende in ein Rückstellwiderlager 71 eingreift, zum Ausschwenken aus dem Auswurfschacht 67 um eine Wippenachse 72 schwenkbar gelagert.

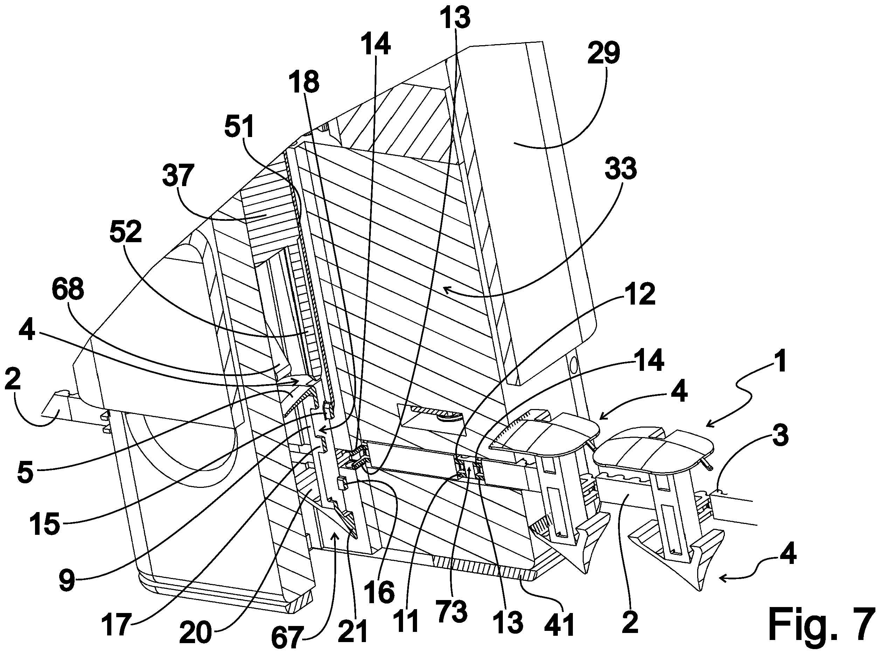

Fig. 7 zeigt in einer perspektivischen teilgeschnittenen Detailansicht die Anordnung gemäß Fig. 6 im Bereich des in dem Auswurfschacht 67 angeordneten Befestigungsankers 4. Aus Fig. 7 ist ersichtlich, dass das Transportband 2 in einer in dem Kopflagerteil 33 eingebrachten Transportbandführungsnut 73 angeordnet ist, wobei die Zahnstruktur 3 in Richtung des in Fig. 7 nicht dargestellten Transportbandförderzahnrades 65 weist und mit diesem in Eingriff ist. Dadurch lassen sich die an dem Transportband 2 angebrachten Befestigungsanker 4 für jeden Setzvorgang nacheinander in den Auswurfschacht 67 transportieren. Zu Beginn des Setzvorganges sind, wie in Fig. 7 dargestellt, das Einstechmesser 51 und der Einschiebestift 52 außer Eingriff mit den Schaftanbindungsstegen 11, 12, 13, 14 des Befestigungsankerbandes 1 beziehungsweise dem Befestigungsanker 4.

Für den Beginn des Setzvorganges ist es hier noch erforderlich, dass die Stirnplatte 41 wenigstens mit einer vorbestimmten, durch den Kraftsensor 40 aufgenommenen Andruckkraft auf ein Weichmaterial aufgedrückt wird, um den Auslösetastknopf 42 freizuschalten.

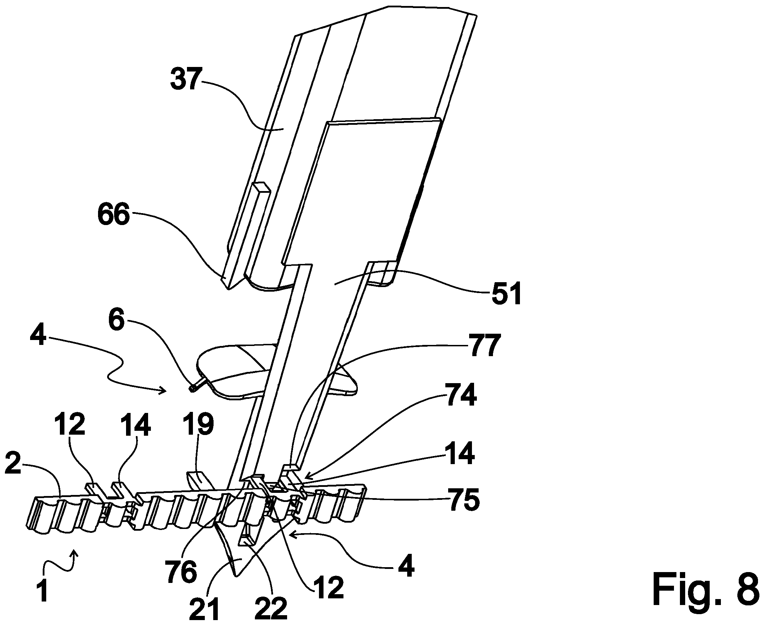

Fig. 8 zeigt in einer perspektivischen Detailansicht die Anordnung des Befestigungsankerbandes 1 und der Schubstange 37 nach Beginn des Setzvorganges mit einer gegenüber der Anordnung gemäß Fig. 6 und Fig. 7 vorgeschobenen Schubstange 37. In dieser Anordnung ist das Einstechmesser 51 so weit vorgeschoben, dass an einem Einstechende 74 des Einstechmessers 51 ausgebildete, gegenüber einer zwischen die Schaftanbindungsstege 11, 12, 13, 14 angeordneten Kopfschneide 75 beidseitig angeordneten Stirnrandschneiden 76, 77 als Schaftanbindungsschneiden, die hier zum optimalen Ausnutzen der Schubkraft zum Abtrennen in Längsrichtung zueinander versetzt sind, gerade mit einem Schaftanbindungssteg 12 in Kontakt beziehungsweise unmittelbar vor einem Kontakt mit einem Schaftanbindungssteg 14 sind. Diese einen Abtrennvorgang bewirkende Bewegung wird durch entsprechende Ausgestaltung der Steuernut 61 bei freier Verschiebbarkeit der Verschiebekulisse 36 in Längsrichtung über die in Fig. 8 nicht dargestellte Druckfeder 35 bewirkt, wobei in Fig. 8 eine Zwischenstellung unmittelbar zu Beginn des Abtrennvorganges des Befestigungsankers 4 von dem Transportband 2 dargestellt ist, in der die Abtrennschneiden 66 noch in einem Abstand von den Deckplattenanbindungsstegen 6 sind.

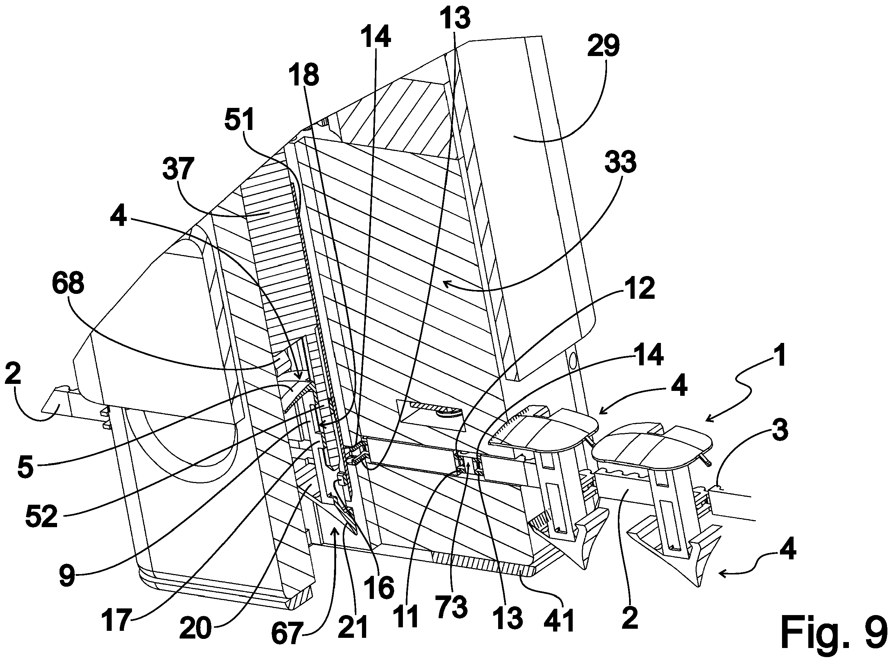

Fig. 9 zeigt in einer Darstellung entsprechend Fig. 7 die Schubstange 37 in einer gegenüber der Stellung gemäß Fig. 8 weiter vorgeschobenen Anordnung, in der das Einstechmesser 51 alle Schaftanbindungsstege 11, 12, 13, 14 durchtrennt hat und der Einschiebestift 52 in den Aufnahmeraum 18 eingetreten ist, jedoch noch einen Abstand von dem Queranschlag 22 aufweist. Dabei sind die Dimensionen des Aufnahmeraumes 18 und des Einschiebestiftes 52 so eingerichtet, dass zwischen dem Befestigungsanker 4 und dem Einschiebestift 52 ein gewisser Reibschluss vorhanden ist, der den Befestigungsanker 4 gegen Herausfallen ausreichend fest gesichert an dem Einschiebestift 52 hält.

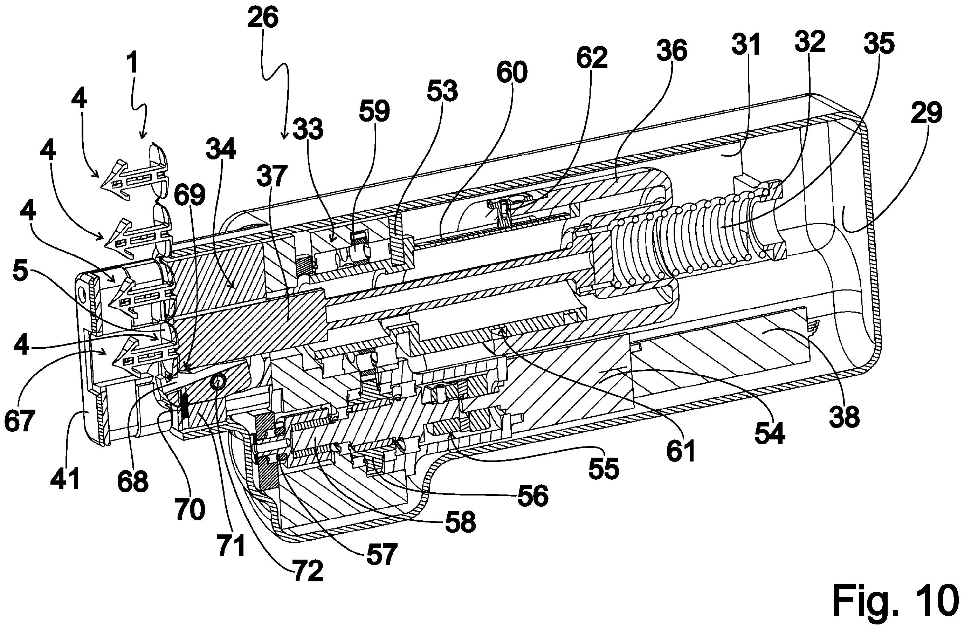

Fig. 10 zeigt in einer geschnittenen perspektivischen Ansicht das beispielhafte motorisch angetriebene Setzwerkzeug 26 entsprechend der Darstellung gemäß Fig. 6 mit der Verschiebekulisse 36 in einer weiteren Zwischenstellung, in der die Schubstange 37 an der Deckplatte 5 des in dem Auswurf Schacht 67 angeordneten Befestigungsankers 4 anliegt sowie über Einwirken der Abtrennschneiden 66 die Deckplattenanbindungsstege 6 abgetrennt und damit die Verbindung zu dem dem Auswurfschacht 67 nächstbenachbarten Befestigungsanker 4 zerstört ist. In dieser weiteren Zwischenstellung der Schubstange 37 ist die Fixierwippe 68 außer Eingriff mit der Deckplatte 5, so dass der in dem Auswurfschacht 67 befindliche, vollständig von dem Transportband 2 und dem benachbarten Befestigungsanker 4 abgetrennte Befestigungsanker 4 zum unmittelbar darauf folgenden Applizieren bereitgestellt ist.

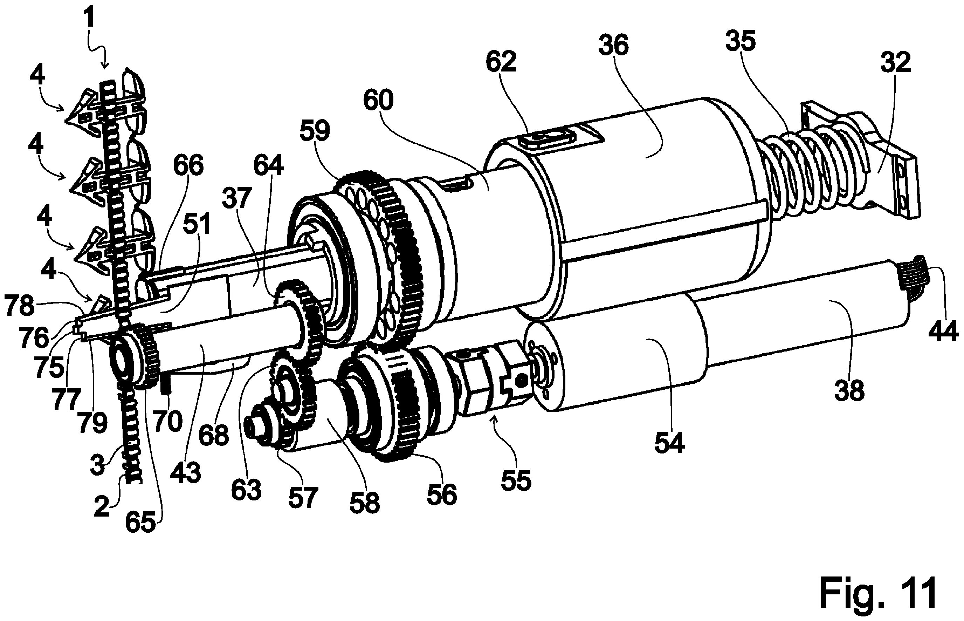

Fig. 11 zeigt das beispielhafte motorisch angetriebene Setzwerkzeug 26 in einer Darstellung gemäß Fig. 5 mit der Verschiebekulisse 36 in der weiteren Zwischenstellung gemäß Fig. 10. Aus der Darstellung gemäß Fig. 11 ist ersichtlich, dass die Kopfschneide 75 sowie die Stirnrandschneiden 76, 77 über die in der Darstellung gemäß Fig. 11 verdeckte Spitze 21 des applizierbereiten Befestigungsankers 4 vorstehen und sich an die Stirnrandschneiden 76, 77 anschließende, sich in Längsrichtung erstreckende Seitenschneiden 78, 79 abschnittsweise seitlich über die Spitze 21 hinaus erstrecken.

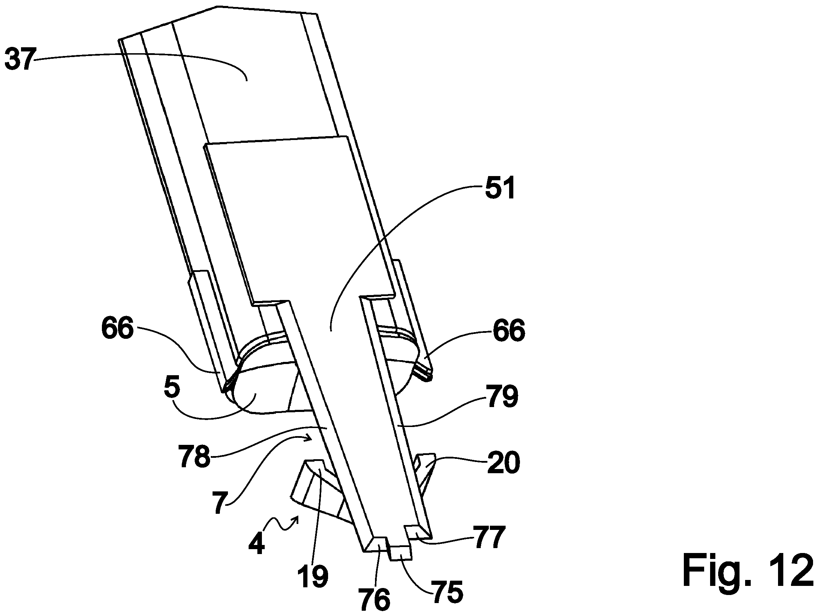

Fig. 12 zeigt in einer Detailansicht die Anordnung des applizierbereiten Befestigungsankers 4 und des Einstechmessers 51 gemäß Fig. 11 in einer vergrößerten Darstellung. Aus Fig. 12 ist ersichtlich, dass die Seitenschneiden 78, 79 ausgehend von den Stirnrandschneiden 76, 77 in Richtung der Schubstange 37 zunehmend weiter voneinander beabstandet sind, um eine seitliche Schneidwirkung bei dem weiter unten näher erläuterten Eindringvorgang des Befestigungsankers 4 zu bewirken.

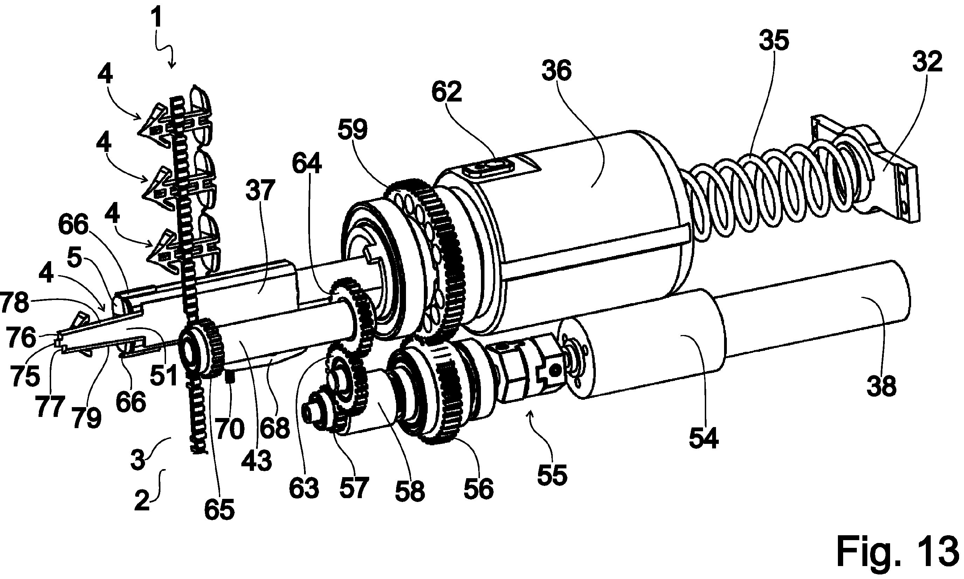

Fig. 13 zeigt schließlich das beispielhafte motorisch angetriebene Setzwerkzeug 26 in einer Darstellung entsprechend Fig. 11 mit der Verschiebekulisse 36 in einer im weitesten von der Widerlagerplatte 32 beabstandeten und an die in Fig. 13 nicht dargestellte Anschlagplatte 53 anliegenden Anordnung, in der entsprechend auch die Schubstange 37 so weit vorgeschoben ist, dass der sich zuvor in dem Auswurfschacht 67 befindliche Befestigungsanker 4 nunmehr in einem Abstand von dem Transportband 2 angeordnet ist. Damit ist der Setzvorgang mit Applizieren dieses Befestigungsankers 4 in einem in der Darstellung gemäß Fig. 13 nicht dargestellten nachgiebigen Weichmaterial abgeschlossen.

Alternativ erfolgt der Setzvorgang bei einer Abwandlung anstatt mit einer durchgehenden, durch die Federkraft der Druckfeder 35 und entsprechender Ausgestaltung der Steuernut 61 bewirkten durchgehenden Bewegung der Verschiebekulisse 36 von einer am weitesten rückgezogenen Anordnung beispielsweise gemäß Fig. 6 in die am weitesten vorgeschobene Anordnung beispielsweise gemäß Fig. 13 über eine zweistufige Bewegung, bei der in einem ersten Bewegungsvorgang durch eine entsprechend ausgestaltete Steuernut 61 die Verschiebekulisse 36 von der am weitesten rückgezogenen Anordnung beispielsweise gemäß Fig. 6 in eine dann metastabile Zwischenstellung insbesondere gemäß Fig. 11 zwangsgeführt wird. Von dieser metastabilen Zwischenstellung wird dann durch ein über den Kraftsensor 40 kraftgesteuertes Freischalten des Auslöseknopfes 42 über die Federkraft der Druckfeder 35 bei freier Verschiebbarkeit der Verschiebekulisse 36 die am weitesten vorgeschobene Stellung der Verschiebekulisse 36 erreicht.

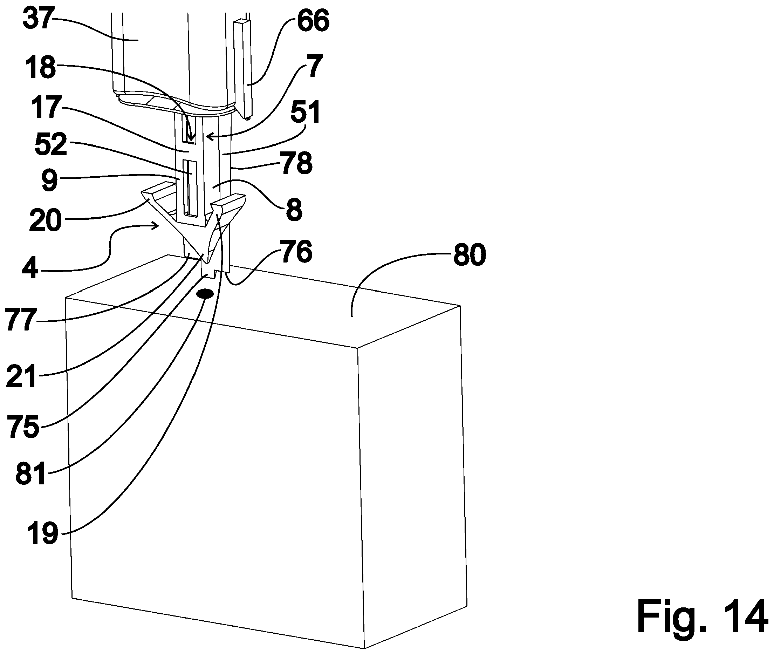

Fig. 14 zeigt in einer Detailansicht den Beginn eines Appliziervorganges eines von dem Transportband 2 abgetrennten Befestigungsankers 4 in ein teilgeschnitten blockartig dargestelltes nachgiebiges Weichmaterial 80. Zweckmäßigerweise bei einer manuellen Montage durch einen Laserauftreffpunkt 81 referenziert wird das Einstechmesser 51 positioniert und der bei einer ausreichend hohen Andruckkraft freigeschaltete Auslösetastknopf 42 betätigt.

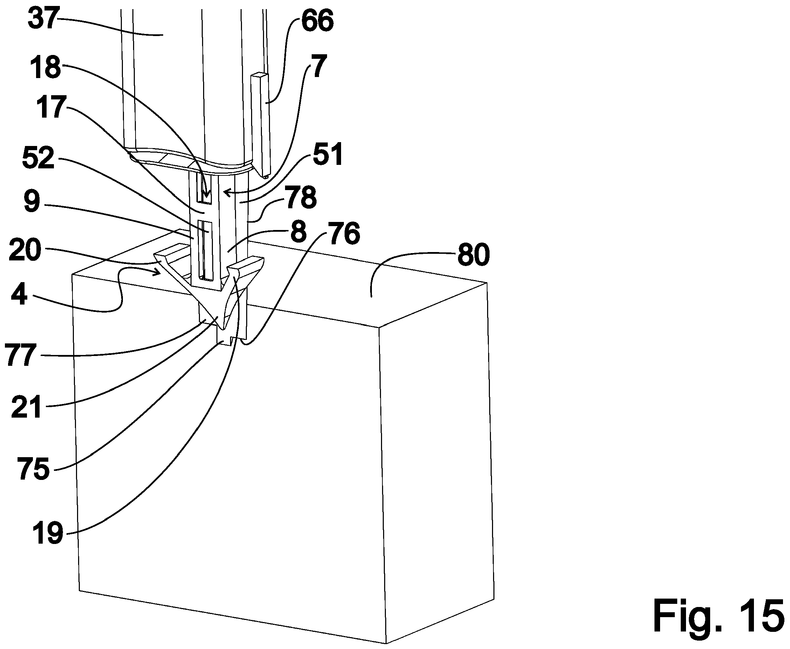

Fig. 15 zeigt die Anordnung gemäß Fig. 14 nach Betätigen des Auslösetastknopfes 42 mit einem teilweise in das Weichmaterial 80 eingedrungenen Einstechmesser 51 , welches durch die Wirkung der Kopfschneide 75, der Stirnrandschneiden 76, 77 und der Seitenschneiden 78, 79 für die Spitze 21 und die Hakenwange 19, 20 des Befestigungsankers 4 in dem Weichmaterial 80 eine Schwächungszone schafft und somit die zum Eindringen des Befestigungsankers 4 erforderliche Kraft verringert.

In diesem Zusammenhang sei angemerkt, dass sich die Größen der zum Setzen eines Befestigungsankers 4 erforderlichen, insbesondere durch die Geometrie der Widerhakenanordnung 10 bestimmten Setzkraft und der Auszugskraft des Befestigungsankers 4 aus einem Weichmaterial durch die relativen Abmessungen des Einstechmessers 51 im Vergleich zu der Widerhakenordnung bestimmen. So nimmt die Setzkraft, aber auch die Auszugskraft bei relativ größer dimensionierten Einstechmessern 51 ab und umgekehrt. Durch entsprechende Wahl der relativen Dimensionen lassen sich gezielt gewünschte Werte für die Setzkraft und die Auszugskraft einstellen.

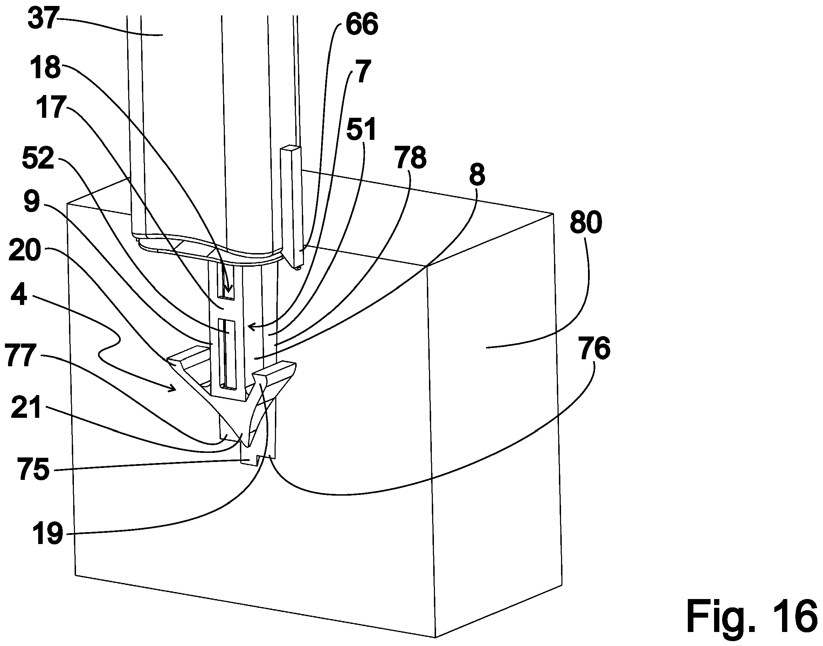

Fig. 16 zeigt das Einstechmesser 51 in seiner am weitesten in das Weichmaterial 80 eingedrungenen Stellung, in der die Widerhakenanordnung 10 und der Schaft 7 des Befestigungsankers 4 vollständig innerhalb des Weichmateriales 80 angeordnet sind, während die Deckplatte 5 auf der Außenseite des Weichmateriales 80 anliegt. Durch entsprechendes vorheriges Eindrücken des Weichmateriales 80 mit der Stirnplatte 41 lässt sich der Befestigungsanker 4 mit einer gewissen Vorspannung in dem Weichmaterial 80 applizieren.

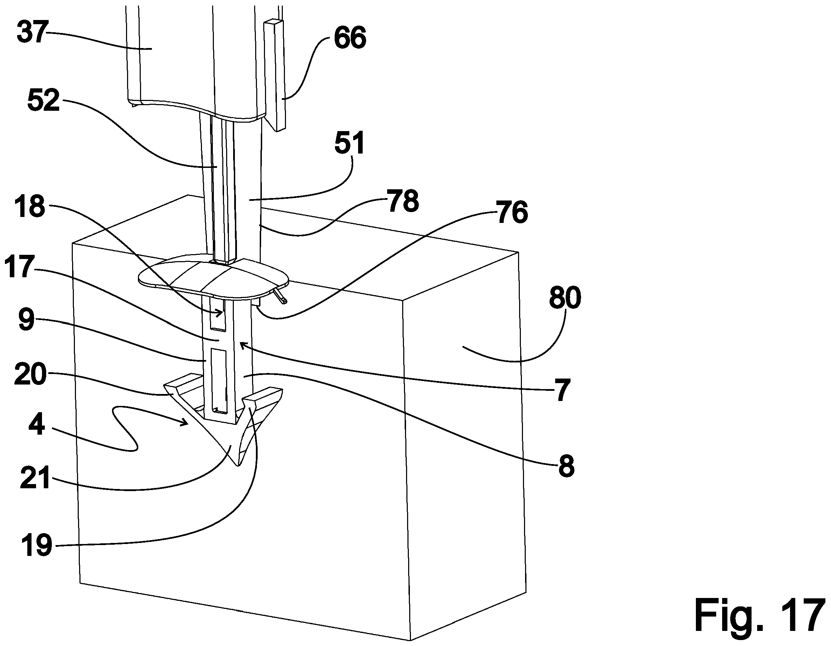

Fig. 17 schließlich zeigt die Endphase des Setzvorganges mit dem in dem Weichmaterial 80 applizierten Befestigungsanker 4 und einem wieder teilweise rückgezogenen Einstechmesser 51. An dieser Stelle sei angemerkt, dass die Reibungskraft zwischen dem Einschiebestift 52 und dem Befestigungsanker 4 so eingerichtet ist, dass der Befestigungsanker 4 zum einen sicher an dem Einschiebestift 52 gehalten ist, jedoch beim Herausziehen des Einschiebestiftes 52 aus dem Aufnahmeraum 18 keine so hohen Kräfte erforderlich sind, dass die Verankerung des Befestigungsankers 4 in dem Weichmaterial 80 nennenswert beeinträchtigt wäre.

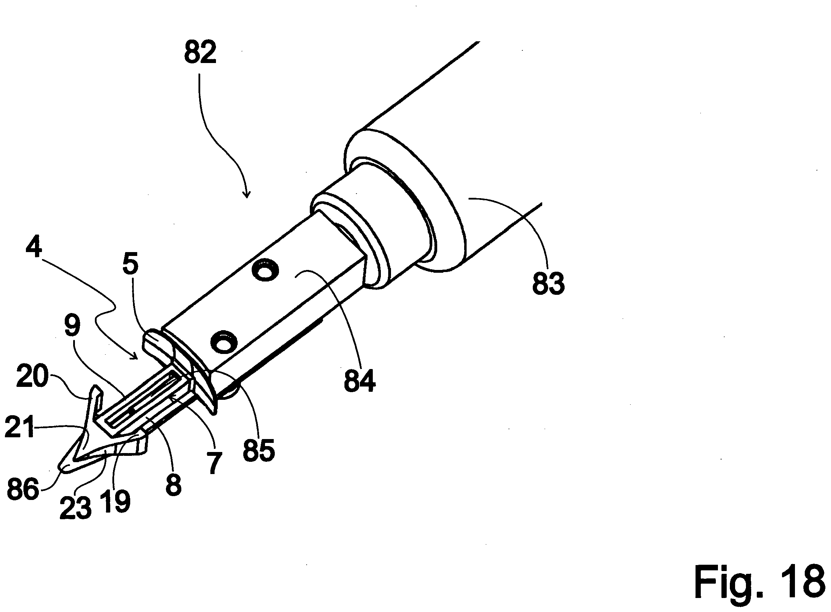

Fig. 18 zeigt in einer perspektivischen Ansicht ein Beispiel eines manuell handhabbaren Setzwerkzeuges 82, das zur Verwendung mit einem einzigen Befestigungsanker 4 gemäß dem anhand Fig. 2 erläuterten Ausführungsbeispiel eingerichtet ist. Das Setzwerkzeug 82 gemäß Fig. 18 verfügt über ein Handstück 83, an dem eine Zwischenstange 84 angebracht ist. An der starren Zwischenstange 84 ist zum einen ein eine Eingriffstruktur bildender Einschiebestift 85, der entsprechend dem motorisch angetriebenen Setzwerkzeug 26 zum reibschlüssigen Eingriff mit dem Aufnahmeraum 18 eingerichtet ist, und ein Einstechmesser 86 angebracht, das bei Anliegen der Deckplatte 5 des Befestigungsankers 4 an dem dem Handstück 83 abgewandten Ende der Zwischenstange 84 über die Spitze 21 des Befestigungsankers 4 übersteht und eine angeschärfte Spitze aufweist. Somit ist der Befestigungsanker 4 auch mit dem manuell handhabbaren erfindungsgemäßen Setzwerkzeug 82 entsprechend einem anhand Fig. 14 bis Fig. 17 erläuterten Appliziervorgang in einem in Fig. 18 nicht dargestellten nachgiebigen Weichmaterial 80 befestigbar.

## Patentansprüche

1. Befestigungsanker (4) zum Verankern in einem nachgiebigen Weichmaterial (80) mit einer Deckplatte (5), mit einem an der Deckplatte (5) angeformten sowie sich von dieser weg erstreckenden länglichen Schaft (7) und mit einer an dem der Deckplatte (5) abgewandten Ende an den Schaft (7) angeformten Widerhakenanordnung (10), wobei der Schaft (7) eine Aufnahmestruktur aufweist, die zum umschließenden Eingriff mit einer Eingriffstruktur (52, 85) eines Setzwerkzeugs (26, 82) eingerichtet ist, und wobei die Aufnahmestruktur einen sich in Längsrichtung des Schaftes (7) erstreckenden Aufnahmeraum (18) aufweist, in den ein Einschiebestift (52, 85) des Setzwerkzeugs (26, 82) einfügbar ist und der durch eine einen Queranschlag (22) bildende Spitze (21) abgeschlossen ist, **dadurch gekennzeichnet, dass** der Aufnahmeraum (18) durch zwei einander gegenüber liegende Schaftwangen (8, 9) begrenzt ist, die durch eine Anzahl von Querstreben (15, 16, 17) miteinander verbunden sind, wobei die Schaftwangen (8, 9) sowie die Querstreben (15, 16, 17) den Aufnahmeraum (18) bilden.

2. Befestigungsanker nach Anspruch 1, **dadurch gekennzeichnet, dass** eine Gruppe von Querstreben (15, 16) an einer Längsseite der Schaftwangen (8, 9) und wenigstens eine weitere Querstrebe (17) an der anderen Längsseite der Schaftwangen (8, 9) angeordnet ist.

3. Befestigungsanker nach Anspruch 1 oder 2, **dadurch gekennzeichnet, dass** zwischen von der Spitze (21) abgewandten Enden von Hakenwangen (19, 20) und den jeweils gegenüber liegenden Schaftwangen (8, 9) jeweils eine Hintergriffsvertiefung (24, 25) ausgebildet ist.

4. Befestigungsankerband (1) mit einer Anzahl von Befestigungsankern (4) nach einem der Ansprüche 1 bis 3, wobei die Befestigungsanker (4) über wenigstens einen an jeweils eine Schaftwange (8, 9) angeformten Schaftanbindungssteg (11, 12, 13, 14) an wenigstens einem mit einer Zahnstruktur (3) ausgebildeten Transportband (2) angebracht sind.

5. Befestigungsankerband nach Anspruch 4, **dadurch gekennzeichnet, dass** die Deckplatten (5) jedes Befestigungsankers (4) über wenigstens einen Deckplattenanbindungssteg (6) mit einer Deckplatte (5) wenigstens eines benachbarten Befestigungsankers (4) verbunden sind.

## Claims

1. A fastening anchor (4) for anchoring in a soft yielding material (80) with a cover plate (5), with an elongate shank (7) formed on the cover plate (5) and extending away therefrom, and with a barb arrangement (10) formed on the shank (7) on the end facing away from the cover plate (5), the shank (7) comprising a receiving structure dimensioned for surrounding engagement with an engaging structure (52, 85) of a setting tool (26, 82), and the receiving structure comprising a receiving space (18) which extends along a longitudinal direction of the shank (7) and into which an insertion pin (52, 85) of the setting tool (26, 82) can be inserted and which is terminated by a tip (21) forming a cross stop (22), **characterized in that** the receiving space (18) is delimited by two mutually facing shank cheeks (8, 9) connected to each other by a plurality of cross struts (15, 16, 17), wherein the shank cheeks (8, 9) and the cross struts (15, 16, 17) form the receiving space (18).

2. The fastening anchor according to claim 1, **characterized in that** a group of cross struts (15, 16) are disposed on one long side of the shank cheeks (8, 9) and at least one further cross strut (17) is disposed on the other long side of the shank cheeks (8, 9).

3. The fastening anchor according to claim 1 or 2, **characterized in that** a rear engagement recess (24, 25) is respectively formed between ends of hook cheeks (19, 20) facing away from the tip (21), and the respectively opposite shank cheeks (8, 9).

4. A fastening anchor band (1) comprising a plurality of fastening anchors (4) according to any one of claims 1 to 3, wherein the fastening anchors (4) are mounted on at least one conveyor belt (2) via at least one shank tie web (11, 12, 13, 14) formed on a respective shank cheek (8, 9), said conveyor belt including a tooth structure (3).

5. The fastening anchor band according to claim 4, **characterized in that** the cover plates (5) of each fastening anchor (4) are connected to a cover plate (5) of at least one adjacent fastening anchor (4) via at least one cover plate tie web (6).

## Revendications

1. Clip de fixation ou d'ancrage (4) destiné à être ancré dans un matériau mou souple (80), comprenant une plaquette de couverture (5), comprenant également un corps allongé (7) formé sur la plaquette de couverture (5) et faisant saillie de celle-ci, et comprenant un agencement de crochet en contre-dépouille (10) formé à l'extrémité du corps allongé (7), qui est opposée à celle où se trouve la plaquette de couverture (5), clip de fixation
dans lequel le corps allongé (7) présente une structure d'accueil, qui est conformée pour venir en prise avec une structure de préhension (52, 85) d'un outillage de pose (26, 82), en l'entourant, et
dans lequel la structure d'accueil présente un logement d'accueil (18), qui s'étend dans la direction longitudinale du corps allongé (7) et à l'intérieur duquel peut être insérée une broche insérable (52, 85) de l'outillage de pose (26, 82), et qui est fermé par une pointe (21) formant une butée transversale (22), **caractérisé en ce que** le logement d'accueil (18) est délimité par deux joues de corps allongé (8, 9) mutuellement opposées, qui sont reliées mutuellement par un certain nombre de branches transversales (15, 16, 17), les joues de corps allongé (8, 9) ainsi que les branches transversales (15, 16, 17) formant le logement d'accueil (18).

2. Clip de fixation selon la revendication 1, **caractérisé en ce qu'**un groupe de branches transversales (15, 16) est agencé sur un côté longitudinal des joues de corps allongé (8, 9), et au moins une autre branche transversale (17) est agencée sur l'autre côté longitudinal des joues de corps allongé (8, 9).

3. Clip de fixation selon la revendication 1 ou la revendication 2, **caractérisé en ce qu'**entre des extrémités opposées à la pointe (21), de joues de crochet (19, 20), et les joues de corps allongé (8, 9) respectivement en regard, il est formé un creux de contre-dépouille (24, 25).

4. Bande de clips de fixation (1) comprenant un certain nombre de clips de fixation (4) selon l'une des revendications 1 à 3, dans laquelle les clips de fixation (4) sont placés, par l'intermédiaire d'au moins une languette d'attache de corps allongé (11, 12, 13, 14) formée respectivement sur une joue de corps allongé (8, 9), sur au moins une bande de transport (2) réalisée avec une structure dentée (3).

5. Bande de clips de fixation selon la revendication 4, **caractérisée en ce que** les plaquettes de couverture (5) de chaque clip de fixation (4) sont reliées, par l'intermédiaire d'au moins une barrette d'attache de plaquette de couverture (6), à une plaquette de couverture (5) d'au moins un clip de fixation (4) voisin.
